Europäisches Patentamt

European Patent Office

Office européen des brevets

(19)

(11) Numéro de publication : **0 453 347 B1**

(12)

# FASCICULE DE BREVET EUROPEEN

(45) Date de publication du fascicule du brevet :
**17.08.94 Bulletin 94/33**

(51) Int. Cl.⁵ : **G01V 3/08, F42C 13/08**

(21) Numéro de dépôt : **91400920.4**

(22) Date de dépôt : **04.04.91**

(54) Procédé de détection d'un véhicule terrestre ferro-magnétique.

(30) Priorité : **05.04.90 FR 9004343**

(43) Date de publication de la demande :
**23.10.91 Bulletin 91/43**

(45) Mention de la délivrance du brevet :
**17.08.94 Bulletin 94/33**

(84) Etats contractants désignés :
**DE ES GB IT NL SE**

(56) Documents cités :
EP-A- 0 290 811
DE-A- 3 405 439
DE-C- 2 552 397
GB-A- 2 204 407
US-A- 3 308 760

(73) Titulaire : **GIAT Industries**
**13, route de la Minière**
**F-78034 Versailles Cédex (FR)**

(72) Inventeur : **Ferrandiz, Jean-Marie**
**10, rue des Hortensias**
**F-31270 Cugnaux (FR)**
Inventeur : **Cuq, Bernard**
**9, rue des Monts de l'Aubrac**
**F-31240 L'Union (FR)**
Inventeur : **Bureau, Gilles**
**25 rue de la Chenaie**
**F-31820 Pibrac (FR)**
Inventeur : **Molle, Frédéric**
**Route de Chignat**
**F-63910 Bouzel (FR)**
Inventeur : **Fournié, Philippe**
**19, rue Rodolose**
**F-31300 Toulouse (FR)**
Inventeur : **Reygasse, Jean**
**82, route de Lombez**
**F-31830 Plaisance du Touch (FR)**

Jouve, 18, rue Saint-Denis, 75001 PARIS

## Description

L'invention concerne un procédé et un dispositif de détection d'un véhicule terrestre ferro-magnétique, notamment adaptés pour commander la mise à feu d'une mine.

Il existe, à l'heure actuelle, plusieurs techniques destinées à la localisation d'un objet. Parmi celles-ci, une technique courante, utilisée pour la localisation d'un objet ferro-magnétique, consiste à enregistrer les variations de chacune des composantes du champ magnétique, de façon à localiser l'objet à partir des perturbations du champ magnétique terrestre qu'il engendre.

Les dispositifs utilisés pour la mise en oeuvre de cette technique comportent principalement des ensembles de mesures composés de trois capteurs ferro magnétiques disposés selon les trois axes d'un trièdre droit, et une unité de traitement des signaux délivrés par ces capteurs. De tels dispositifs, notamment décrits dans les brevets FR 2.613.063 et FR 2.586.302, permettent de déterminer avec précision la position d'un objet ferro-magnétique. Toutefois, ils requièrent l'utilisation d'au moins deux trièdres de mesure pour localiser avec précision l'objet, et imposent un traitement sophistiqué des signaux délivrés par les capteurs.

Le brevet GB-2 204 407 décrit un dispositif de détection comprenant trois capteurs magnétiques disposés en trièdre droit et un calculateur déterminant un paramètre relatif à la trajectoire suivie par un véhicule.

Ce paramètre permet de n'autoriser le fonctionnement de la mine que dans le cas où le véhicule doit passer suffisamment près de cette dernière. Cependant, ce document prévoit que pour provoquer le déclenchement d'une mine il est nécessaire d'utiliser un système de détection de proximité qui pourra par exemple exploiter une mesure de la composante verticale du champ magnétique.

Le document US-3 308 760 décrit une fusée de proximité magnétique pour un projectile. La fusée comporte trois capteurs magnétiques formant trièdre. Cette fusée utilise la valeur du champ magnétique total mesuré pour déterminer l'instant de mise à feu.

La présente invention vise à pallier cet inconvénient et a pour principal objectif de fournir un procédé permettant de déduire la position d'un véhicule terrestre ferro-magnétique à partir de l'exploitation des mesures d'un seul trièdre de capteurs.

A cet effet, le procédé selon l'invention, adapté pour détecter le passage d'un véhicule terrestre ferro-magnétique, en vue notamment de la mise à feu d'un mine, où on mesure les trois composantes X, Y, Z du champ magnétique a moyen de trois capteurs magnétiques disposés suivant les trois axes d'un trièdre droit, caractérisé en ce que :

a) l'on calcule, en temps réel, les variations HX,
HY, HZ de ces trois composantes par rapport au champ magnétique terrestre, ainsi que les modules horizontal MH et total MT des variations,

b) l'on compare à chaque instant t la valeur des modules total et horizontal et de la composante verticale par rapport à la valeur de ces modules et composante, à l'instant t-1, et lon mémorise les valeurs maximale et minimale respectives MTmax, MTmin, MHmax, MHmin, HZmax, et HZmin, desdits modules et composante,

c) et l'on délivre une information de présence du véhicule lorsque :

     c-1) le module total maximal MTmax est supérieur à un seuil prédéterminé S2,

     c-2) la valeur du module horizontal MH à l'instant t a progressé régulièrement pendant un laps de temps déterminé, par rapport à la valeur minimale MHmin mémorisée,

     c-3) et le rapport $\dfrac{HZmax - HZmin}{MHmax}$ est supérieur à un seuil prédéterminé K1.

Ce procédé consiste donc à traiter les variations des trois composantes de la perturbation magnétique terrestre, ainsi que les modules horizontal et total issus de ces trois composantes. La localisation précise du véhicule est obtenue en recherchant puis en exploitant des extrema et des rapports d'amplitude sur les modules total et horizontal et sur la composante verticale.

Ainsi, la présence d'un véhicule est détectée par une augmentation suffisante du module total. La position longitudinale de ce véhicule s'obtient ensuite en recherchant si le module horizontal a franchi une valeur minimale qui correspond, comme on le comprendra mieux plus loin, à la position dudit véhicule où ce dernier se trouve à l'aplomb du trièdre de mesure. La position transversale est, quant à elle, déduite en calculant le rapport entre les amplitudes verticale et horizontale du champ magnétique. Ce rapport voisin de un Lorsque le véhicule se trouve à l'aplomb du trièdre de mesure décroit en effet rapidement dès que la masse magnétique est éloignée latéralement de ce trièdre.

Ce procédé permet ainsi de fournir une information de présence d'un véhicule dès que celui-ci se trouve à l'aplomb du trièdre de mesure. En outre, grâce à la simplicité du principe de traitement, le processus de détection est suffisamment rapide pour détecter des véhicules se déplaçant à 30 m/s. Enfin, ce procédé permet de détecter le passage des véhicules, quelle que soit leur direction dans le champ terrestre.

Selon un mode de mise en oeuvre préférentiel, le traitement des étapes (b) et (c) précitées n'est autorisé que lorsque le module total est supérieur à un seuil prédéterminé. Le traitement complet n'est donc effectué que lorsqu'une variation significative du module total, correspondant à l'approche d'un véhicule, est décelée. Cette caractéristique qui permet d'économiser le temps de traitement des signaux et ainsi d'économiser de l'énergie, présente un caractère avantaqeux lorsque le dispositif est autonome et comporte une source d'énergie intégrée.

Selon une autre caractéristique de l'invention l'on délivre une information de présence du véhicule, lorsque (c-4) le rapport $\dfrac{MHmin}{MHmax}$ est inférieur à une valeur prédéterminée K2.

Cette condition supplémentaire requise pour délivrer l'information de présence du véhicule, constitue une sécurité supplémentaire permettant de s'assurer que ce véhicule se trouve à l'aplomb du trièdre de mesure.

En outre, et dans le même but, l'on délivre préférentiellement une information de présence du véhicule, lorsque (c-5) le rapport $\dfrac{MTmin}{MTmax}$ est inférieur à une valeur prédéterminée K4.

Cette condition constitue une autre sécurité supplémentaire, car les variations du module total dont la valeur est calculée à partir de la valeur des trois composantes, sont moins sujettes à des variations parasites entraînant par exemple une diminution temporaire accidentelle de la valeur de ce module, que les variations du module horizontal.

Par ailleurs, et selon une autre caractéristique de l'invention, on délivre l'information de présence du véhicule lorsque (c-6) le rapport $\dfrac{MH}{MHmax}$ est supérieur à une valeur prédéterminée K3.

Cette condition supplémentaire vise à empêcher que l'information de présence d'un véhicule soit délivrée si celui-ci se trouve légèrement décalé transversalement par rapport au trièdre de mesure.

En effet, dans ce cas, les variations des modules horizontal et total étant moins prononcées, les conditions (c-4) et (c-5) peuvent ne pas être remplies alors que la condition (c-3) est remplie.

Cette condition supplémentaire permet alors d'éviter que le traitement ne se poursuive en fin de passage du véhicule.

Par ailleurs, l'ensemble de ces conditions à respecter pour délivrer une information de présence du véhicule permet de limiter, dans le cas de la commande de la mise à feu d'une mine, des déclenchements intempestifs engendrés par des variations magnétiques créées au moyen de systèmes de leurrage.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description,

- la figure 1 est un schéma synoptique d'un dispositif conforme à l'invention,
- la figure 2 représente les courbes de variations de la composante verticale, du module total et du module horizontal du champ maqnétique, lors du passage d'un véhicule décalé transversalement par rapport au système de mesure,
- la figure 3 illustre la position du véhicule par rapport au système de mesure engendrant les variations du champ magnétique représentées à la figure 2,
- la figure 4 représente les courbes de variations de la composante verticale, du module total et du module horizontal du champ magnétique, lors du passage d'un véhicule à l'aplomb du système de mesure,
- la figure 5 illustre la position du véhicule par rapport au système de mesure engendrant les variations du champ magnétique représentées à la figure 4,
- les figures 6a, 6b, 6c représentent le logigramme de fonctionnement général du dispositif.

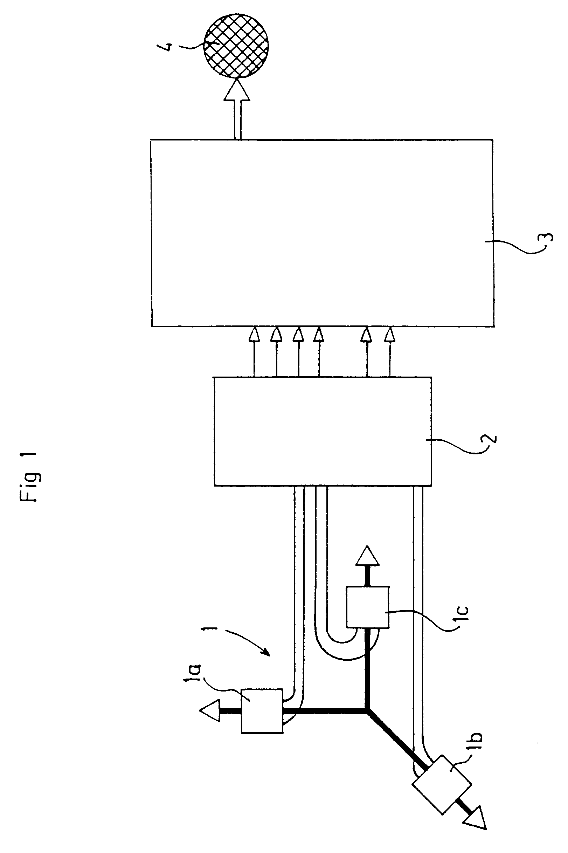

Le dispositif représenté à la figure 1 est conçu pour fournir une information de présence d'un véhicule terrestre ferro-magnétique, lorsque ce véhicule se trouve à l'aplomb de ce dispositif, en vue de la mise à feu d'une mine, telle qu'une mine largable par obus.

Ce dispositif comprend, en premier lieu, un trièdre de mesure 1 constitué de trois capteurs magnétiques 1a, 1b, 1c identiques, disposés selon les trois axes d'un trièdre droit. Les capteurs utilisés sont des magnétorésistances en raison, d'une part, de la facilité de mise en oeuvre de tels capteurs et, d'autre part, de leur très bonne sensibilité qui permet la détection de véhicules très peu ferro-magnétiques.

Le dispositif comprend également un convertisseur analogique/numérique 2 adapté pour saisir les signaux magnétiques délivrés par le trièdre de mesure, et numériser lesdits signaux.

Ce dispositif comprend, en outre, un microcalculateur 3 relié au convertisseur analogique numérique 2 et adapté pour assurer le traitement des signaux numériques. Ce microcalculateur 3 comporte, à cet effet, et de façon classique, une mémoire programme contenant un programme d'opérations logiques à effectuer et une mémoire pour le stockage des résultats. Enfin, ce microcalculateur 3 comprend une sortie de détection 4 adaptée pour être reliée au dispositif de mise à feu de la mine.

Le dispositif comprend enfin des moyens d'alimentation électrique intégrés (non représentés) tels qu'une pile, lui conférant une parfaite autonomie.

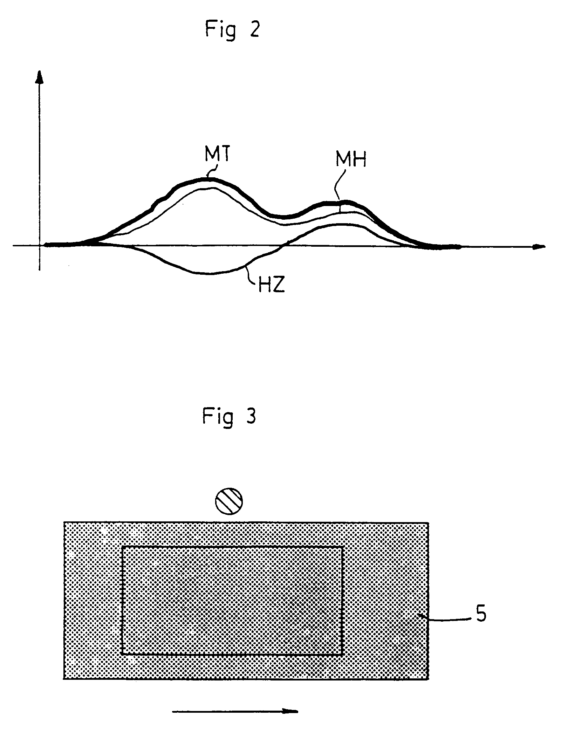

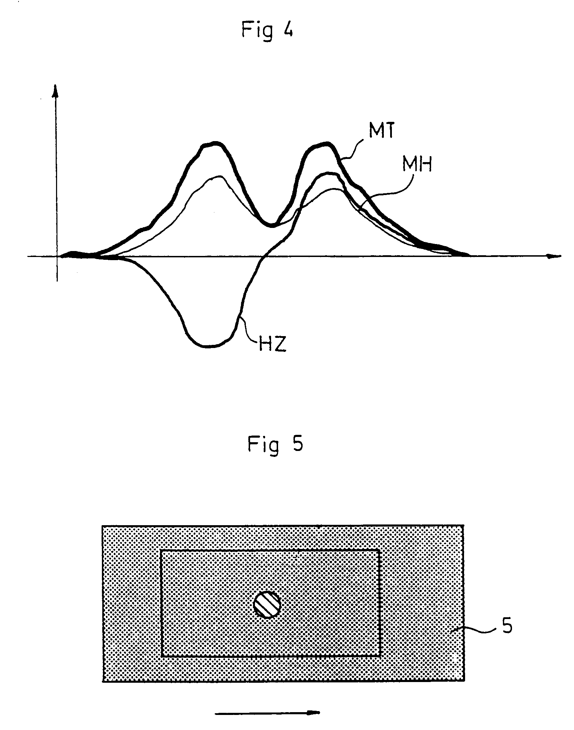

Afin de mieux comprendre le principe du traitement des signaux numériques, les courbes des variations du champ magnétique relevées lorsqu'un véhicule passe soit à proximité (figure 3), soit à l'aplomb (figure 5) d'un trièdre de mesure, sont présentées en annexe.

Tel que représenté aux figures 2 et 4, les valeurs du module horizontal et du module total varient de façon similaire, à savoir augmentent dans un premier temps jusqu'à un premier maxima, puis diminuent jusqu'à un minima correspondant à une position du véhicule 5 où celui-ci est centré sur le dispositif de mesure, augmentent à nouveau jusqu'à un deuxième maxima et diminuent enfin, en fin de passage du véhicule 5.

La valeur de la composante verticale varie, elle, en sens inverse, c'est-à-dire décroit dans un premier temps jusqu'à un premier minima, augmente ensuite jusqu'à un maxima en passant par une valeur nulle correspondant à la position centrée du véhicule, et décroit à nouveau jusqu'à s'annuler en fin de passage du véhicule 5.

En outre, il ressort des relevés effectués, comme le démontre un examen comparatif des figures 2 et 4, que les écarts entre les valeurs extrêmes sont beaucoup plus faibles lorsque le véhicule 5 est décalée transversalement par rapport au système de mesure, par rapport aux variations relevées lorsque ce véhicule 5 passe à l'aplomb de ce dispositif.

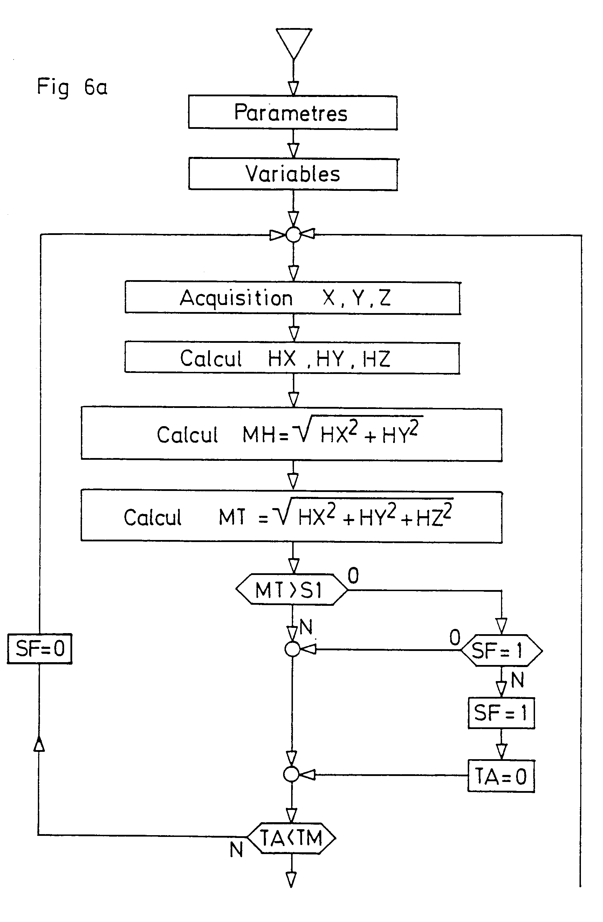

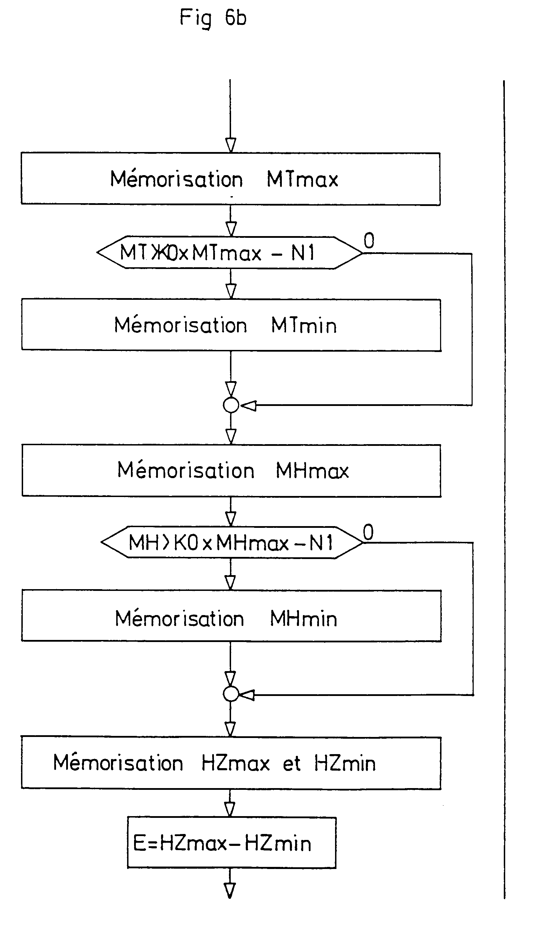

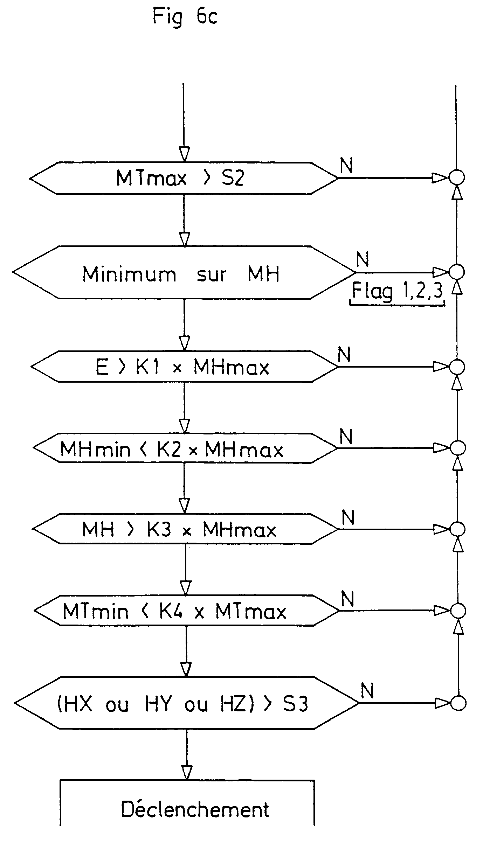

Au vu de ces données, le logigramme de fonctionnement général de ce dispositif de détection est décrit ci-après en référence aux figures 6a à 6c.

Préalablement, et de façon classique, les différents paramètres et variables sont mémorisés. De plus, dans la mémoire de stockage de résultats, il est affecté une valeur nulle à MHmax, MTmax, et HZmax, et une valeur supérieure aux valeurs réellement possibles à MHmin, MTmin et HZmin.

La première étape consiste en l'acquisition des trois composantes X, Y, Z du champ magnétique, puis au calcul des variations HX, HY, HZ, du module horizontal de ces variations MH et du module total de ces variations MT.

Ensuite, le logiciel procède à un test de proximité du véhicule 5. Ce test consiste à comparer le module total MT à un seuil S1 de départ du traitement, et à n'autoriser la suite du traitement qu'une fois ce seuil S1 franchi.

De plus, une temporisation TA, incrémentée à chaque boucle du traitement, n'autorise la poursuite de ce traitement que lorsque la valeur de cette temporisation est inférieure à une durée TM mémorisée, correspondant au temps de passage maximal d'un véhicule 5.

En outre, lorsque pour la première fois, la valeur du module total devient supérieure à S1, on incrémente un paramètre SF à la valeur 1, et on impose une valeur nulle à la temporisation TA.

Les conditions relatives au test de proximité étant alors satisfaites, les étapes de traitement sont autorisées. Toutefois, si au bout d'un temps supérieur à TM les conditions de déclenchement n'ont pas été satisfaites, les étapes du traitement sont à nouveau inhibées au niveau du test de proximité, et on impose à nouveau une valeur nulle au paramètre SF.

Une fois les conditions relatives au test de proximité satisfaites, le logiciel élabore donc les variables du traitement, en comparant, lors de chaque boucle, les valeurs calculées des modules horizontal et total, et de la composante verticale, avec les valeurs mémorisées de ces module et composante, de façon à conserver en mémoire les valeurs extrêmales.

En outre, seules sont mémorisées en tant que valeurs minimales, les valeurs des modules total et horizontal inférieures à un pourcentage prédéterminé des valeurs maximales MTmax et MHmax mémorisées.

En l'exemple, cette valeur des modules doit être inférieure à (ko x max M - N1) où ko = 0,9 et N1 = 10 milli Gauss. Si l'on se réfère aux courbes des variations des modules total et horizontal, cette condition vise à empêcher, notamment lors de la première phase ascendante de ces courbes, qu'une diminution parasite ne soit interprétée comme une valeur minimale.

Si l'on se réfère à nouveau aux courbes, l'élaboration des variables du traitement va donc consister dans un premier temps à mémoriser la valeur maximale des modules total et horizontal (phase ascendante de la courbe), puis dans un deuxième temps, la valeur minimale de ces modules.

Dans un même temps, la valeur minimale de la composante verticale est tout d'abord mémorisée, puis sa valeur maximale. De plus, on calcule à chaque instant t l'écart E = maxHZ - minHZ.

La dernière phase du traitement consiste à déterminer si les conditions de déclenchement sont satisfaites. Ces conditions de déclenchement sont les suivantes :

- Niveau de signal suffisant sur le module total maximal, par comparaison de ce module avec un seuil S2 = 50 mG,
- Franchissement d'une valeur minimale sur le module horizontal. A cet effet, on s'assure que ce module horizontal a progressé régulièrement, par exemple durant trois acquisitions successives, par rapport à la valeur minimale MHmin mémorisée,
- Rapport entre l'amplitude de la composante verticale E et le module horizontal maximal, suffisant et supérieur à un coefficient K1 = 0,8
- Valeur minimale des modules horizontal et total suffisante et telle que le rapport de la valeur maximale sur cette valeur minimale soit supérieur à un coefficient K2 = K4 = 0,7
- Rapport du module horizontal sur la valeur maximale de ce module, supérieur à un coefficient K3 = 0,25 : condition imposant une remontée suffisante de la valeur de MH pour éviter un déclenchement en fin de passage du véhicule 5,
- Valeurs des composantes HX, HY, HZ supérieures à un seuil S3 prédéterminé. Cette condition, quelque peu redondante, vise à se garantir en toutes circonstances contre un déclenchement en fin de passage du véhicule 5.

Toutes ces conditions de déclenchement sont parfaitement adaptées pour que l'information de présence du véhicule soit délivrée lorsque ce véhicule se trouve centré au-dessus du dispositif de mesure, position correspondant à la valeur minimale des modules horizontal et total.

Il est à noter que les valeurs des différents coefficients K0... K4 et des seuils S1, S2, N1, sont des valeurs déterminées pour un dispositif de mesure et une population de véhicules à détecter donnés, et peuvent être ajustées selon l'application envisagée.

## Revendications

1. Procédé pour détecter le passage d'un véhicule terrestre (5) ferro-magnétique, notamment en vue de la mise à feu d'une mine, du type consistant à enregistrer les variations de chacune des composantes du champ magnétique de façon à localiser ledit véhicule à partir des perturbations du champ magnétique terrestre, où on mesure les trois composantes X, Y, Z du champ magnétique au moyen de trois capteurs magnétiques 1a, 1b, 1c disposés suivant les trois axes d'un trièdre droit, caractérisé en ce que :

    a) l'on calcule, en temps réel, les variations HX, HY, HZ de ces trois composantes par rapport au champ magnétique terrestre, ainsi que les modules horizontal MH et total MT des variations,

    b) l'on compare à chaque instant t la valeur des modules total et horizontal et de la composante verticale par rapport à la valeur de ces modules et composante, à l'instant t-1, et l'on mémorise les valeurs maximale et minimale respectives MTmax, MTmin, MHmax, MHmin, HZmax, et HZmin, desdits modules et composante,

    c) et l'on délivre un information de présence du véhicule (5) lorsque :

        c-1) le module total maximal MTmax est supérieur à un seuil prédéterminé S2,

        c-2) la valeur du module horizontal MH à l'instant t a progressé régulièrement pendant un laps de temps déterminé par rapport à la valeur minimale MHmin mémorisée,

        c-3) et le rapport $\dfrac{HZmax - HZ\,min}{MHmax}$ est supérieur à un seuil prédéterminé K1.

2. Procédé selon la revendication 1, caractérisé en ce que l'on n'autorise les étapes (b) et (c) que lorsque le module total MT est supérieur à un seuil prédéterminé.

3. Procédé selon l'une des revendications 1 ou 2, caractérisé en ce que l'on mémorise à un instant t, en tant que valeurs minimales, les seules valeurs des modules total MT et horizontal MH inférieures à un pourcentage prédéterminé des valeurs maximales MTmax et MHmax mémorisées desdits modules total et horizontal.

4. Procédé selon l'un des revendications précédentes, caractérisé en ce que (c) l'on délivre une information de présence du véhicule (5), lorsque (c-4) le rapport $\dfrac{MHmin}{MHmax}$ est inférieur à un valeur prédéterminée K2.

5. Procédé selon la revendication 4, caractérisé en ce que (c), l'on délivre une information de présence du véhicule (5), lorsque (c-5) le rapport $\dfrac{MTmin}{MTmax}$ est inférieur à une valeur prédéterminée K4.

6. Procédé selon la revendication 5, caractérisé en ce que (c) l'on délivre une information de présence du véhicule (5), lorsque (c-6) le rapport $\dfrac{MH}{MHmax}$ est supérieur à une valeur prédéterminée K3.

## Patentansprüche

1. Verfahren zum Detektieren eines ferromagnetischen Landkraftwagens (5), insbesondere um eine Mine zu zünden, indem die Schwankungen der einzelnen Komponenten des Magnetfelds so aufgezeichnet werden, daß man das besagte Fahrzeug aufgrund der Störungen des Erdmagnetfelds lokalisieren kann, wobei man die drei Komponenten X, Y, Z des Magnetfelds mittels drei, gemäß den drei Achsen eines Trieders angeordneten Magnetgebern (1a, 1b, 1c) mißt, dadurch gekennzeichnet, daß:

    a) man die Schwankungen HX, HY, HZ dieser drei Komponenten in bezug auf das Erdmagnetfeld in Echtzeit errechnet, sowie das Waagerechtmodul MH und das Gesamtmodul MT der Schwankungen,

    b) man den Wert des Gesamt- und Waagerechtmoduls und die senkrechte Komponente zu jedem Zeitpunkt t mit dem Wert dieser Module und Komponenten am Zeitpunkt t-1 vergleicht, und daß man die jeweiligen Höchst- und Mindestwerte MTmax, MTmin, MHmax, MHmin, HZmax und HZmin der besagten Module und Komponenten speichert,

    c) man eine Information über die Anwesenheit des Fahrzeugs liefert, wenn:

        c-1) das Gesamtmodul maximal HTmax eine vorbestimmte Schwelle S2 überschreitet,

c-2) der Wert des waagerechten Moduls MH am Zeitpunkt t regelmäßig während eines bestimmten Zeitraums angestiegen ist, und zwar in bezug auf den gespeicherten Mindestwert MHmin,

c-3) das Verhältnis $\dfrac{HZmax - HZmin}{MHmax}$ eine vorbestimmte Schwelle K1 überschreitet.

2. Verfahren nach Anspruch 1, dadurch gekennzeichnet, daß man die Etappen (b) und (c) erst dann freigibt, wenn das Gesamtmodul eine vorbestimmte Schwelle überschreitet.

3. Verfahren nach einem der Ansprüche 1 oder 2, dadurch gekennzeichnet, daß man zu einem Zeitpunkt t nur diejenigen Werte des Gesamtmoduls MT und des Waagerechtmoduls MH als Mindestwerte speichert, die unter einem vorbestimmten Prozentsatz der gespeicherten Höchstwerte MTmax und MHmax der besagten Waagerecht- und Gesamtmodule liegen.

4. Verfahren nach einem der vorstehenden Ansprüche, dadurch gekennzeichnet, daß (c) man eine Information über die Fahrzeuganwesenheit (5) liefert, wenn (c-4) das Verhältnis

$$\dfrac{MHmin}{MHmax}$$

kleiner als ein vorbestimmter Wert K2 ist.

5. Verfahren nach Anspruch 4, dadurch gekennzeichnet, daß (c) man eine Information über die Fahrzeugsanwesenheit (5) liefert, wenn (c-5) das Verhältnis

$$\dfrac{MTmin}{MTmax}$$

kleiner als ein vorbestimmter Wert K4 ist.

6. Verfahren nach Anspruch 5, dadurch gekennzeichnet, daß (c) man eine Information über die Fahrzeuganwesenheit (5) liefert, wenn (c-6) das Verhältnis

$$\dfrac{MH}{MHmax}$$

größer als ein vorbestimmter Wert K3 ist.

## Claims

1. Process for detecting the passage of a ferromagnetic land vehicle (5) notably with a view to detonating a mine, of the type involving recording the variations in each component of the earth's magnetic field so as to locate the said vehicle on the basis of the disturbances in the earth's magnetic field, where the three components X, Y and Z of the magnetic field are measured by means of three magnetic sensors (1a, 1b and 1c) arranged along the three mutually perpendicular axes of an erect frame of reference, characterised in that:

a) the variations HX, HY and HZ of these three components are calculated in real time with respect to the earth's magnetic field, together with the horizontal and total moduli MH and MT respectively of the variations;

b) the value of the total and horizontal moduli and of the vertical component are compared at each time t with the value of these moduli and component at the time t-1, and the respective maximum and minimum values $MT_{max}$, $MT_{min}$, $MH_{max}$, $MM_{min}$, $HZ_{max}$ and $HZ_{min}$ of the said moduli and component are stored;

c) and a signal indicating the presence of the vehicle (5) is emitted when:

c-1) the maximum total modulus $MT_{max}$ exceeds a predetermined threshold S2;

c-2) the value of the horizontal modulus MH at time t has changed regularly during a predetermined period of time with respect to the stored minimum value $MH_{min}$.

c-3) and the ratio $(HZ_{max} - HZ_{min})/MH_{max}$ exceeds a predetermined threshold K1.

2. Process according to claim 1, characterised in that stages (b) and (c) are authorised only when the total modulus MT exceeds a predetermined threshold.

3. Process according to one of the claims 1 or 2, characterised in that the only minimum values stored at time t are the values of the total and horizontal moduli MT and MH respectively less than a predetermined percentage of the stored maximum values $MT_{max}$ and $MH_{max}$ of the said total and horizontal moduli.

4. Process according to one of the above claims, characterised in that (c) a signal indicating the presence of the vehicle (5) is emitted when (c-4) the ratio $MH_{min}/MH_{max}$ is less than a predetermined value K2.

5. Process according to claim 4, characterised in that (c) a signal indicating the presence of the vehicle (5) is emitted when (c-5) the ratio $MT_{min}/MT_{max}$ is less than a predetermined value K4.

6. Process according to claim 5, characterised in that (c) a signal indicating the presence of the vehicle (5) is emitted when (c-6) the ratio $MH/MH_{max}$ exceeds a predetermined value K3.

Fig 1

Fig 2

Fig 3

Fig 4

Fig 5

Fig 6a

Parametres

Variables

Acquisition  X , Y , Z

Calcul  HX , HY , HZ

Calcul  $MH = \sqrt{HX^2 + HY^2}$

Calcul  $MT = \sqrt{HX^2 + HY^2 + HZ^2}$

MT > S1

SF = 1

SF = 0

SF = 1

TA = 0

TA < TM

Fig 6b

Mémorisation MTmax

MT>K0xMTmax – N1   0

Mémorisation MTmin

Mémorisation MHmax

MH>K0xMHmax – N1   0

Mémorisation MHmin

Mémorisation HZmax et HZmin

E=HZmax–HZmin

Fig 6c

MTmax > S2 — N

Minimum sur MH — N

Flag 1,2,3

E > K1 × MHmax — N

MHmin < K2 × MHmax — N

MH > K3 × MHmax — N

MTmin < K4 × MTmax — N

(HX ou HY ou HZ) > S3 — N

Déclenchement